# EUROPÄISCHE PATENTANMELDUNG

(11) **EP 1 107 146 A2**
(43) Veröffentlichungstag der Anmeldung: **13.06.2001**
(21) Anmeldenummer: 00126775.6
(22) Anmeldetag: 06.12.2000
(51) Int. Cl.: G06F 17/60, G07F 7/00

(54) **Verfahren zur Präsentation von Angeboten, wie Waren und Dienstleistungen**

(30) Priorität: 06.12.1999 DE 19958609
(71) Anmelder: Erzmann, Gerwin, 52152 Simmerath-Lammersdorf (DE)
(72) Erfinder: Erzmann, Gerwin, 52152 Simmerath-Lammersdorf (DE); Düster, Hans-Uwe, 52223 Stolberg (DE)
(74) Vertreter: Castell, Klaus, Dr.-Ing.

(57) **Zusammenfassung**

Verschiedene Angebote, wie Waren und Dienstleistungen, werden in einem Umfeld dargestellt, indem die Angebote üblicherweise benutzt werden. Dieses Umfeld mit den Angeboten wird vorzugsweise live verfilmt und einer Vielzahl von Nutzern über ein Netzwerk zur Verfügung gestellt. Diese Nutzer können beispielsweise mittels einer Mouse ein beliebiges Angebot anklicken und ihnen werden dann für dieses Angebot weitere Informationen zur Verfügung gestellt.

## Beschreibung

Die Erfindung betrifft ein Verfahren zur Präsentation von Angeboten, wie Waren und Dienstleistungen, bei dem verschiedene Angebote in einem Umfeld dargestellt werden, in dem die Angebote üblicherweise benutzt werden, und das Umfeld mit den Angeboten abgebildet und in einem Netzwerk einer Vielzahl von Nutzern zur Verfügung gestellt wird.

Zur Präsentation von Waren dienen üblicherweise Auslagen in Geschäften und Schaufenstern. Bei diesen Warenangeboten wurden ursprünglich nur Waren einer einzelnen Firma dargestellt. Insbesondere bei Kaufhäusern ist es jedoch üblich, Waren verschiedenartigster Firmen in einer Schaufenster-auslage zusammenzustellen und möglichst ansprechend den Kunden zu präsentieren.

Es ist auch bekannt, Waren abzubilden und in einem Netzwerk einer Vielzahl von Nutzern zur Verfügung zu stellen. Sofern die Übertragung von Fernsehinformationen als Netzwerk betrachtet wird, werden bei den üblichen Werbesendungen unterschiedlichsten Nutzern nacheinander in unterschiedlichen Fernsehspots verschiedene Waren präsentiert.

Eine ähnliche Präsentation der Waren hat sich auch im Internet manifestiert. Im Internet tritt die Bewegtbilddarstellung in Folge der schlechteren Übertragungsraten gegenüber Fernsehspots zurück. Ein wesentlicher Vorteil des Internets ist jedoch die Möglichkeit, auf die Informationsdarbietung interaktiv einzuwirken.

Es zeichnet sich jedoch immer stärker ab, dass die im Fernsehen dargestellten Fernsehspots aufgrund von technischen Raffinessen immer besser werden. Diese Fernsehspots leiden jedoch daran, dass der Beobachter nicht interaktiv in die Darstellung eingreifen kann. Präsentationen im Internet sind hingegen meistens stark auf die Interaktion mit dem Nutzer abgestimmt und erlauben daher - wenn überhaupt - nur kurze Werbespots, die innerhalb kürzester Zeit die angewählte Information vermitteln.

Der Erfindung liegt die Aufgabe zugrunde, ein gattungsgemäßes Verfahren zur Präsentation von Angeboten derart weiterzuentwickeln, dass es eine lebendige Warenpräsentation erlaubt und gleichzeitig eine einfache Interaktion mit dem Nutzer ermöglicht.

Diese Aufgabe wird mit einem Verfahren gelöst, das kumulativ die folgenden Merkmale aufweist:
- Es werden verschiedene Angebote in einem Umfeld dargestellt, in dem die Angebote üblicherweise benutzt werden. Die Angebote werden somit nicht einzeln seriell nacheinander dargestellt, sondern in einem Umfeld werden zueinander passende Angebote ausgewählt und dargestellt. Dies kann soweit führen, dass zwischen Requisite und zu verkaufender Ware nicht mehr unterschieden werden kann, da alle dargestellten Waren in einem Umfeld stehen, in dem sie üblicherweise benutzt werden.
- Das Umfeld wird mit den Angeboten abgebildet und einer Vielzahl von Nutzern in einem Netzwerk zu Verfügung gestellt. Dieses der üblichen Angebotsnutzung entsprechende Umfeld mitsamt den verschiedenen Angeboten wird vorzugsweise als Bewegtbild in ein Netzwerk eingespeist, um das Angebot nicht nur den vor Ort stehenden Nutzern sondern einer Vielzahl weiterer Benutzer zur Verfügung zu stellen. Vorgesehen ist hierbei, dass vorzugsweise vor Ort keine Nutzer stehen und das Angebot ausschließlich über das Netzwerk wahrgenommen werden kann.
- Auf der Präsentationsfläche sind aktive Felder um die Darstellung der Angebote angelegt. Die Angebote können somit am Bildschirmrand nochmals abgebildet sein und derart mit einem Aktiven Feld umgeben werden, dass durch Anklicken dieses Feldes die hinter diesem Feld stehenden Informationen freigegeben werden. Vorteilhaft ist es jedoch, wenn die aktiven Felder mit den Angeboten ihre Position auf der Präsentationsfläche verändern. Dies erlaubt es bei einem Bewegtbild, bei dem die Angebote - beispielsweise der Hut einer Person - sich auf der Bildschirmoberfläche bewegen, ein aktives Feld gemeinsam mit dem Angebot zu bewegen. Mit der Mouse kann man somit dem Angebot, wie beispielsweise dem Hut des Mannes nachgehen und das Angebot anklicken, sowie der Mousezeiger im Bereich des aktiven Feldes steht.
- Ein Nutzer kann auf ein Angebot deuten und ihm werden dann für dieses Angebot weitere Informationen zur Verfügung gestellt. Beispielsweise über einen Mouseklick kann der Nutzer auf der Abbildung ein Angebot auswählen und ihm werden dann vorzugsweise automatisch für dieses Angebot weitere Informationen zur Verfügung gestellt.

Der Nutzer kann somit im Internet eine Darstellung unterschiedlicher Angebote verfolgen und währenddessen zu einem beliebigen Angebot weitere Informationen einholen. Dies unterscheidet das erfindungsgemäße Verfahren deutlich von bekannten Verfahren, da bei allen bekannten Verfahren zur Präsentation von Angeboten in Netzwerken, wie beispielsweise dem Internet, zunächst ein Wunsch artikuliert werden muss und dann diesem Wunsch entsprechend eine Darstellung dieser gewünschten Angebote initiiert werden kann. Bei dem erfindungsgemäßen Verfahren kann der Nutzer sich hingegen in eine laufende Präsentation unterschiedlichster Waren einklinken, ohne zuvor zu wissen, welche Warenangebote ihn erwarten. Dies erscheint zunächst widersinnig, da somit für den Nutzer primär keine Veranlassung besteht, sich in die laufende Präsentation einzuklinken. Die sich dadurch ergebenden neuen Möglichkeiten der Präsentation ermöglichen es aber, die Präsentation so interessant zu gestalten, dass die Grenze zwischen Warenpräsentation und Spielfilm oder Dokumentarfilm fließend wird. Die übliche Unterscheidung zwischen Werbung und Unterhaltung kann dadurch aufgebrochen werden, so dass entweder in Unterhaltungsfilmen eine Warenpräsentation abläuft oder eine Warenpräsentation zum Unterhaltungs-film wird.

Dies erlaubt es, durch Unterhaltungsfilme nicht nur künstliche Welten zu schaffen, sondern ermöglicht es dem Beobachter durch das Kaufangebot sich einen Teil dieser künstlichen Welt als reale Ware oder Dienstleistung anzueignen.

Bevorzugt ist es, reale Handlungsabläufe darzustellen, die für den Beobachter zwar wünschenswert sind, aber von seiner Ist-Situation nicht soweit entfernt sind, dass sie als Utopien wirken. Es werden daher beispielsweise natürliche häusliche Situationen nachgestellt oder mit geringst möglichem Eingriff gefilmt, um eine möglichst natürliche Warenpräsentation zu erzielen. Als Umfeld für die Warenpräsentation eignen sich somit gleicher-maßen ein reales Kaufhaus, ein virtuelles Kaufhaus, ein häusliches Umfeld einer Familie oder ein Ausflug einer Familie, beispielsweise ans Meer oder in die Berge, wobei hier der Phantasie keine Grenzen gesetzt sind.

Um ein möglichst vielfältiges Angebot präsentieren zu können, wird vorgeschlagen, dass die verschiedenen Angebote von unterschiedlichen Herstellern stammen. Dies erschwert zwar die Organisation des zur Verfügungsstellens weiterer Informationen, es erhöht jedoch die Natürlichkeit des dargestellten Umfeldes und erweitert die Darstellungsmöglichkeiten.

Vorteilhaft ist es, wenn die Angebote, zu denen weitere Informationen zur Verfügung gestellt werden, mit einer Kennzeichnung versehen sind. Die er-findungsgemäße Darstellungsweise verwischt die Unterscheidung zwischen Requisite und Angebot und dies führt dazu, dass möglicherweise Dinge ange-klickt werden, die tatsächlich nur Requisite sind und nicht verkäuflich sind. Die Kennzeichnung erleichtert es dem Nutzer, die Warenangebote zu erkennen und verhindert es, dass Dinge angewählt werden, zu denen keine weiteren Informationen zur Verfügung stehen.

Die Kennzeichnung wird vorzugsweise als zuschaltbarer Modus zur Verfügung gestellt, so dass die Story mit und ohne Zuschaltung der Angebots-kennzeichnungen verfolgt werden kann. Ein bevorzugtes Ausführungsbeispiel sieht vor, dass durch einen Mouseklick auf eine bestimmte Bild-schirmposition beispielsweise die letzten 3, 5 oder 10 Sekunden als Wiederholung mit gekennzeichneten Angeboten dargestellt werden, oder dass eine Anzahl Buttons, ähnlich einer Tastatur, zur Verfügung steht, wobei die Belegung der Schaltflächen variabel bleibt.

Die weiteren zur Verfügung gestellten Informationen können auf den Hersteller, dessen Firma und weitere ähnliche Waren verweisen. Besonders vorteilhaft ist es jedoch, wenn der Nutzer einzelne Angebote, auf die er gedeutet hat, über das Netzwerk bestellen kann. Dies ermöglicht es, die Darstellung des Angebots mit der Bestellung zeitlich eng miteinander zu verknüpfen. Die Bestellungsannahme und Abwicklung kann hierbei entweder zentral für verschiedene Hersteller oder dezentral durch die einzelnen Hersteller erfolgen. Die Bestellungsabwicklung und Auslieferung sind hierbei auf das jeweilige Produkt und den jeweiligen Hersteller abzustimmen.

Die Vorzüge des erfindungsgemäßen Verfahrens erschließen sich vor allem dann, wenn dem Nutzer im zeitlichen Ablauf unterschiedliche Angebote zur Verfügung gestellt werden. Eine sich über einen längeren Zeitraum hinweg-ziehende Präsentation, die durchaus mehrere Stunden in Anspruch nehmen kann, dient hierbei dazu, verschiedenartigste Waren und Dienstleistungen anzubieten. Das Angebot der Waren kann im Tagesrhythmus variieren und unterliegt vorzugsweise auch einem Jahresrhythmus, um saisonalen Bedürfnisschwankungen gerecht zu werden.

Üblicherweise wird die Kameraeinstellung und die Position der aktiven Kamera vorbestimmt. Eine vorteilhafte Ausführungsvariante des Verfahrens sieht jedoch vor, dass der Nutzer durch Anklicken verschiedener Bildpunkte in der Abbildung, beispielsweise auf einer Menüleiste, die aktive Kamera wechseln kann, um das Geschehen von einer anderen Perspektive aus zu beobachten oder andere Räume wahrzunehmen. Vorteilhafterweise kann der Nutzer über die Menüleiste verschiedene- Kamerapositionen auswählen, Gegenstände heranzoomen oder das allgemeine Geschehen in Weitwinkel beobachten. Eine zentrale Vorgabe bildet eine Grundeinstellung, die vom Nutzer jedoch beliebig variiert werden kann.

Zusätzlich zur Wahl verschiedener Kameras in verschiedenen Positionen wird vorgeschlagen, dass der Nutzer verschiedene Umfelder anwählen kann.

Beispielsweise in einem Haus kann er das Umfeld Küche durch Anklicken der jeweiligen Kamera oder das Umfeld Hobbyraum anklicken, um die dortigen Handlungsabläufe zu verfolgen oder gezielt die in derartigen Räumen üblicherweise vorliegenden Gegenstände zu finden und gegebenenfalls zu bestellen. Der Nutzer hat somit die Möglichkeit, seine Produkte nicht durch die Eingabe einer speziellen Herstellerfirma oder durch die Suche nach dem Produktnamen zu finden, sondern über ein Umfeld, in dem derartige Produkte häufig zu finden sind. Sofern der Nutzer ein Buch sucht, wird er sich keine Gedanken über den Titel oder den Hersteller machen sondern die Kamera der gut sortierten Bibliothek anklicken und durch Zoomen oder Ändern der Position das Buch heraussuchen, das in dieser Bibliothek zu finden ist. Wenn der Nutzer beispielsweise ein Lexikon sucht, wird er über das Internet den Raum der Bibliothek anwählen und das dort aufgestellte Lexikon bestellen.

Sofern nur niedrige Datenübertragungsraten zur Verfügung stehen, empfiehlt es sich, eine Serie an hintereinander gereihten Einzelbildern über das Netzwerk zur Verfügung zu stellen. Höhere Übertragungsraten ermöglichen es jedoch, das Umfeld mit den Angeboten und vorzugsweise mit handelnden Personen als Bewegtbild darzustellen. Gerade handelnde Personen erleichtern die Darstellung einer Story und erleichtern eine natürliche Warenpräsentation.

Eine besonders spannende Variante sieht vor, dass das Bewegtbild live über das Netzwerk dem Nutzer zur Verfügung gestellt wird. Dies führt zu einer natürlichen Darstellungsweise, die sich deutlich von üblichen Werbespots unterscheidet. Eine bevorzugte Ausführungsform sieht hierbei ein übliches Lebensumfeld vor, in dem die handelnden Personen ohne Rücksicht auf die Kamera ihr übliches Leben leben. Den handelnden Personen werden hierbei spezielle Produkte zur Verfügung gestellt, die sie nach Belieben nutzen können. Diese Produkte wurden vorher genauer analysiert, so dass während der Präsentation zu diesen Produkten weitere Informationen zur Verfügung gestellt werden können.

Für Kunden mit langsamen Netzzugang wird das Umfeld als virtueller Raum dargestellt, da dadurch eine geringere Übertragungsrate ausreicht, um alle notwendigen Informationen über das Netzwerk zu verteilen. Beispielsweise in einem virtuellen Haus erscheint jedoch die gleiche Warenauswahl wie in einem Realhaus.

Um den Bestellablauf zu erleichtern und einen zusätzlichen Kaufanreiz zu vermitteln wird vorgeschlagen, dass der Nutzer mit der Bestellung eine Lieferzeit angeben kann, bis zum Liefertermin die Summe aller Bestellungen einer Angebotsgruppe ermittelt wird und je nach Bestellsumme dem Nutzer ein Rabatt gewährt wird. Als zusätzliche Information kann der Nutzer hierbei die Rabattstaffel und die Summe der bisher eingegangenen Bestellungen erfragen. Dies ermöglicht Sammelbestellungen, die zu höheren Rabatten beim Verkäufer führen. Sofern diese Rabatte an den Nutzer weitergegeben werden, entsteht ein zusätzlicher Kaufanreiz. Somit kann zum Beispiel kurz vor einem vom ersten Besteller festgelegten Liefertermin noch durch Zusatzaufträge der Verkaufspreis entsprechend einer vorher festgelegten Rabattskala reduziert werden.

Das erfindungsgemäße Verfahren eignet sich zum Aufbau einer Suchmaschine zum Finden von Angeboten wie Waren- und Dienstleistungen, bei der verschiedene Angebote jeweils in einem Umfeld dargestellt werden, in dem die Angebote üblicherweise benutzt werden, und das Umfeld mit den Angeboten abgebildet und einer Vielzahl von Nutzern in einem Netzwerk zur Verfügung gestellt wird, wobei auf der Präsentationsfläche aktive Felder um die Darstellung der Angebote angelegt sind und ein Nutzer auf ein Angebot deuten kann und ihm dann für dieses Angebot weitere Informationen zur Verfügung gestellt werden.

Das beschriebene Verfahren erlaubt es, nicht nur Waren zu präsentieren, sondern ermöglicht es dem Nutzer, auf einfache Art und Weise Waren zu finden. Unabhängig von der Benennung der Produkte oder einem Hersteller hat der Nutzer eine neue Möglichkeit, im Internet Waren zu finden. Da es für den Nutzer häufig unrelevant ist, von welchem Hersteller die Ware ist und außerdem Waren mit verschiedenen Worten benannt werden können, bildet die vorgeschlagene Suchmaschine eine hervorragende Möglichkeit, Waren zu finden, zu denen noch keine genauen Angaben vorhanden sind. Die Vielzahl von Anbietern erschwert es immer weiter bestimmte Waren zu finden und die Sprachenvielfalt im Internet erschwert es darüber hinaus, die gesuchten Waren zu betiteln, um mit klassischen Suchmaschinen die gewünschte Ware zu finden. Die erfindungsgemäBe Suchmaschine ermöglicht es ohne Kenntnis des Herstellers und ohne Kenntnis des Namens der Ware eine Ware zu finden. Der Nutzer überlegt sich nur, in welchem Umfeld die gesuchte Ware verwendet wird. Sowie ihm ein Umfeld einfällt, in dem die gesuchte Ware möglicherweise verwendet wird, klinkt sich der Nutzer über seinen Heimcomputer und das Internet in eine derartige Umgebung ein und verfolgt die dort mit der Kamera aufgenommene Situation, bis er die von ihm gesuchte Ware findet. Hierbei kann er auch das Umfeld mehrmals wechseln, um das richtige Umfeld herauszufinden. Sowie in dem von ihm gewählten Umfeld die Ware auf dem Bildschirm erscheint, fährt der Nutzer mit dem Mousezeiger auf die Ware und klickt sie an, um weitere Informationen zu dieser Ware zu erhalten und sie gegebenenfalls auch sofort zu bestellen.

Wenn der Nutzer beispielsweise einen speziellen Ski sucht, wird er sich in die Aufnahme eines Skirennens einklicken und dort auf einen Ski klicken, der ihm gefällt. Wenn der Nutzer hingegen eine Bohrmaschine sucht, wird er sich in ein Live-Darstellungshaus einklinken und dort die im Hobbyraum aufgestellte Kamera anwählen und dort die Bohrmaschine suchen.

Das über das aktive Feld angewählte Produkt kann vorzugsweise entweder direkt nach dem Anklicken bestellt werden. Das angeklickte Produkte kann jedoch auch als Platzhalter für eine Produktgruppe dienen, so dass beispielsweise beim Anklicken der im Film dargestellten Bohrmaschine eine ganze Bohrmaschinenserie angeboten wird, von der sich der Nutzer eine Bohrmaschine auswählen kann. Das gleiche trifft zu für das Beispiel des Skis, der im Beispielsfall ein spezieller Ski eines Rennläufers ist. Beim Anklicken dieses Skis kann dem Nutzer eine Vielzahl an Skiern gezeigt werden unter denen der Nutzer sich den für ihn passenden Ski auswählt. Das heißt nach dem Anklicken des Produktes über das aktive Feld folgt eine menügesteuerte Abfrage, in der die Art des Produktes, Größe, Menge und andere qualitative Angaben ausgewählt werden, bevor ein spezielles Produkt ausgewählt und in einer bestimmten Menge bestellt wird.

Die Suchmaschine ermöglicht somit einen völlig neuartigen Weg, Produkte oder Informationen im Internet zu finden. Dieser Weg ist vor allem dann geeignet, wenn die Zielvorstellungen des Käufers noch ungenau sind und vor allem eine Festlegung auf einen bestimmten Hersteller noch nicht stattgefunden hat oder keine sicheren Angaben über die Benennung des Produktes vorliegen. Da die Suchmaschine auf Bildern basiert, ist während der Suche des Produktes eine Festlegung auf eine Sprache noch nicht notwendig, so dass die Suchmaschine sprachunabhängig eingesetzt werden kann und auf einfache Art und Weise die Präsentation von Waren und Herstellern aus unterschiedlichen Sprachregionen ermöglicht.

Ein vorteilhaftes Ausführungsbeispiel des erfindungsgemäßen Verfahrens wird im folgenden näher erläutert.

In einem größeren Bauernhaus wohnt eine Familie mit Kindern und Groß-eltern. Diese Familie hat sich dazu bereit erklärt, dass in bestimmten Zimmern des Hauses Fernsehkameras aufgestellt werden. Dies ist im vorliegenden Fall das Wohnzimmer und die Küche der jüngeren Generation, das Wohnzimmer der Großeltern, ein Kinderzimmer, das Zimmer des studieren-den älteren Sohnes und die von allen Familienmitgliedern gemeinsam genutzte Scheune. Die Zimmereinrichtung wird nach Absprache mit den Bewohnern mit Möbelstücken angereichert, die frei verkäuflich sind. So steht beispielsweise im Zimmer des Studenten ein Bett der Firma A, ein Computer der Firma B und ein Bürostuhl der Firma C, die Küchen-einrichtung stammt von der Firma D, die Küchengeräte von der Firma E und der Kühlschrank wird regelmäßig vom Getränkehändler F und vom Feinkost-laden G aufgefüllt. Das Tiefkühlfach enthält Waren der Firma H. Im Wohnzimmer steht ein Fernseher der Firma I und das Telefon stammt von der Firma J. Entsprechend sind alle weiteren Zimmer, in denen Fernsehkameras aufgestellt sind, ausgestattet. Diese Produkte können regelmäßig nach Absprache mit den Bewohnern ausgetauscht werden oder sie bleiben langfristig im Sortiment.

Jedem Hersteller eines dieser Produkte bleibt es überlassen, zu diesem Produkt ein spezielles Informationsangebot zusammenzustellen.

Die Fernsehkameras übertragen live ins Internet, was sich in den einzelnen Räumen abspielt, und eine beliebige Person kann sich in das Angebot einklinken und über ein Menüleiste ein spezielles Zimmer auswählen. Über eine Fenstertechnik können auch verschiedene Zimmer gleichzeitig beobachtet werden.

Die gefilmten Gegenstände, zu denen weitere Informationen zur Verfügung gestellt werden, sind im Film gekennzeichnet. Dies erlaubt es, durch einen Mouseklick auf dieses Produkt weitere Informationen zu erhalten und gegebenenfalls das Produkt direkt über das Netzwerk zu bestellen.

Innerhalb kürzerer Zeit wird auf diesem Bauernhof ein natürliches Leben wieder einkehren, wobei die Bewohner des Hofes den Vorteil haben, dass ihnen unterschiedlichste Waren zum Testen und Nutzen zur Verfügung gestellt werden. Die laufenden Kameras ermöglichen es, diese Waren einer Vielzahl an Nutzern zu präsentieren und die Bestellmöglichkeit ermöglicht es, den Abverkauf direkt zu steigern.

Die Interaktivität erlaubt es, ein natürliches häusliches Treiben zu beobachten und nur auf Anforderung spezielle Produktinformationen zu erhalten.

Die Kameras müssen nicht stationär aufgestellt werden, sondern können je nach Belieben auch auf Ausflüge mitgenommen werden oder umgestellt werden, um den handelnden Personen auch eine Privatsphäre einzuräumen.

Das morgendliche Frühstück mit Cerealien der Firma K auf einem Service der Firma L wird somit live im Internet übertragen. Anschließend bügelt die Hausfrau mit dem neuen Spezialbügler der Firma M und wenn das Kind von der Schule kommt, wirft es den Schulranzen der Firma N in die Ecke und hängt die Jacke der Firma O an den Haken. Dies filmt die Kamera über den gesamten Tag und in den Nachtstunden wird die Übertragung ausgeschaltet. Im Laufe des Jahres wiederholen sich viele Ereignisse und es kommen neue Ereignisse hinzu, wie die Wäsche des Autos in der Werkstatt, das Schmü-cken des Weihnachtsbaumes im gemeinsamen Wohnzimmer oder die Renovierung des Zimmers des älteren Kindes.

Die Events entstehen zum Teil natürlich aufgrund der Anforderungen der Bewohner und werden zum anderen Teil inszeniert, um weitere Waren zu präsentieren.

Das Verfahren erlaubt es, beliebig weitere Kameras aufzustellen, um beispielsweise der Ausübung handwerklicher Berufe beiwohnen zu können. In der alten Scheune des Bauernhofes werden zu verschiedenen vorher festgelegten Zeiten Möbel restauriert, Kerzen gezogen, Gläser geblasen oder Marionetten hergestellt. In einer Ecke wird ein Oldtimer restauriert und mit der Politur der Firma P behandelt. All dies beobachten Kameras, die von Nutzern angewählt werden können und zu den verwendeten Produkten bietet das Netzwerk Zusatzinformationen und die Möglichkeit, die Produkte direkt zu bestellen.

Das Internet verbreitet die Informationen über den gesamten Globus und daher wird die Sprache der handelnden Personen entweder nicht übertragen oder die Events werden im englischen Sprachraum gefilmt.

## Patentansprüche

1. Verfahren zur Präsentation von Angeboten, wie Waren und Dienstleistungen, bei dem verschiedene Angebote in einem Umfeld dargestellt werden, in dem die Angebote üblicherweise benutzt werden, und das Umfeld mit den Angeboten abgebildet und einer Vielzahl von Nutzern in einem Netzwerk zur Verfügung gestellt wird, ***dadurch gekennzeichnet, dass*** auf der Präsentationsfläche aktive Felder um die Darstellung der Angebote angelegt sind und ein Nutzer auf ein Angebot deuten kann und ihm dann für dieses Angebot weitere Informationen zur Verfügung gestellt werden.

2. Verfahren nach Anspruch 1, ***dadurch gekennzeichnet, dass*** die aktiven Felder mit den Angeboten ihre Position auf der Präsentationsfläche verändern.

3. Verfahren nach Anspruch 1 oder 2, ***dadurch gekennzeichnet, dass*** die verschiedenen Angebote von unterschiedlichen Herstellern stammen.

4. Verfahren nach einem der vorhergehenden Ansprüche, ***dadurch gekennzeichnet, dass*** die Angebote, zu denen weitere Informationen zur Verfügung gestellt werden, mit einer Kennzeichnung versehen sind.

5. Verfahren nach einem der vorhergehenden Ansprüche, ***dadurch gekennzeichnet, dass*** der Nutzer einzelne Angebote, auf die er gedeutet hat, über das Netzwerk bestellen kann.

6. Verfahren nach einem der vorhergehenden Ansprüche, ***dadurch gekennzeichnet, dass*** dem Nutzer im zeitlichen Ablauf unterschiedliche Angebote zur Verfügung gestellt werden.

7. Verfahren nach einem der vorhergehenden Ansprüche, ***dadurch gekennzeichnet, dass*** der Nutzer seinen Beobachtungsort im Umfeld variieren kann oder zwischen verschiedenen Umfeldern auswählen kann.

8. Verfahren nach einem der vorhergehenden Ansprüche, ***dadurch gekennzeichnet, dass*** das Umfeld mit den Angeboten und vorzugsweise mit handelnden Personen als Bewegtbild dargestellt wird.

9. Verfahren nach Anspruch 8, ***dadurch gekennzeichnet, dass*** das Bewegtbild live über das Netzwerk dem Nutzer zur Verfügung gestellt wird.

10. Verfahren nach einem der vorhergehenden Ansprüche, ***dadurch gekennzeichnet, dass*** das Umfeld als virtueller Raum dargestellt wird.

11. Verfahren nach einem der vorhergehenden Ansprüche, ***dadurch gekennzeichnet, dass*** der Nutzer mit der Bestellung eine Lieferzeit angeben kann, bis zum Ausliefertermin die Summe aller Bestellungen einer Angebotsgruppe ermittelt wird und je nach Bestellsumme dem Nutzer ein Rabatt gewährt wird.

12. Suchmaschine zum Finden von Angeboten wie Waren- und Dienstleistungen, bei der verschiedene Angebote jeweils in einem Umfeld dargestellt werden, in dem die Angebote üblicherweise benutzt werden und das Umfeld mit den Angeboten abgebildet und einer Vielzahl von Nutzern in einem Netzwerk zur Verfügung gestellt wird, wobei auf der Präsentationsfläche aktive Felder um die Darstellung der Angebote angelegt sind und ein Nutzer auf ein Angebot deuten kann und ihm dann für dieses Angebot weitere Informationen zur Verfügung gestellt werden.
